# EUROPÄISCHE PATENTSCHRIFT

(11) **EP 2 200 355 B1**
(45) Veröffentlichungstag und Bekanntmachung des Hinweises auf die Patenterteilung: **18.10.2017**
(21) Anmeldenummer: 10001622.9
(22) Anmeldetag: 17.01.2001
(51) Int. Cl.: H04M 3/42, H04M 3/53, H04M 1/247, H04W 88/18, H04W 92/02

(54) **Verfahren, Telekommunikations-Endgerät, Short-Message-Dienstzentrum und Telekommunikationssystem zur Übermittlung einer Nachricht**
Method, telecommunications terminal, short message service center and telecommunication system for transmitting a message
Procédé, terminal de télécommunication, centre de service de messages courts et système de télécommunication pour la transmission d'un message

(30) Priorität: 02.02.2000 EP 00102074
(43) Veröffentlichungstag der Anmeldung: 23.06.2010
(62) Teilanmeldung aus: 05010363.9
(73) Patentinhaber: Siemens Aktiengesellschaft, 80333 München (DE)
(72) Erfinder: Becker, Thomas, 59755 Arnsberg (DE); Bruchertseifer, Jörg, 86156 Augsburg (DE); Heling, Guido, 44263 Dortmund (DE); Lucassen, Helmut, 48703 Stadtlohn (DE); Watzke, Jörn, 85368 Moosburg a.d. Isar (DE); Van de Logt, Marco, 47574 Goch (DE)

(56) Entgegenhaltungen:
- WO-A-99/49644
- GB-A- 2 298 339
- US-A- 5 815 506

## Beschreibung

Die Erfindung betrifft ein Verfahren, Telekommunikations-Endgerät, Short-Message-Dienstzentrum und Telekommunikationssystem zur Übermittlung einer Nachricht, bei dem das Telekommunikations-Endgerät an ein leitungsgebundenes Telefonnetz angeschlossen ist.

In nach dem GSM-Standard arbeitenden Mobilfunknetzen hat sich neben der - natürlich bei weitem dominierenden - Sprachkommunikation, insbesondere mit Blick auf erhebliche Kostenvorteile, die Kommunikation mittels kurzer Kurznachrichten (Short Messages) auf der Grundlage des hierfür geschaffenen Standards erfolgreich etabliert. Neben den Kostenvorteilen hat die Nachrichtenübertragung per SMS (Short Message Service) in bestimmten Anwendungsfällen auch Gebrauchswertvorteile. So sind Empfang und Absendung einer SMS ohne akustische Belästigung für die Umgebung realisierbar, und die Übermittlung von Kurznachrichten bietet gegenüber der Sprachkommunikation auch zusätzliche Ausdrucks- und psychologische Akzentuierungsmöglichkeiten.

Bei SMS handelt es sich um einen Punkt-Zu-Punkt-Kurznachrichtendienst, der im Rahmen der GSM-Protokollarchitektur auf der Signalisierungsebene realisiert wird. Er umfaßt den Transport paketorientierter Nutzdaten von und zu Mobilstationen. Die Kurznachrichten werden stets über ein Short-Message-Dienstzentrum (SM SC = Short Message Service Center) im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät - eine weitere Mobilstation oder auch ein Faxgerät o. ä. - weiter.

Zur Realisierung dieses Dienstes definiert der GSM-Standard eine spezielle Protokollarchitektur. Diese ist in den ETSI-Spezifikationen festgelegt und wird in der Literatur hinreichend beschrieben (vgl. etwa J. Eberspächer, H. J. Vögel: "GSM Global System for mobile communication", Stuttgart, 1997), so daß eine genauere Beschreibung hier entbehrlich ist und auf das anhängende Normen-/Dokumentenverzeichnis verwiesen werden kann.

In den bestehenden öffentlichen leitungsgebundenen Telefonnetzen ist eine derartige Übertragung von Kurznachrichten zwischen normalen Telekommunikations-Endgeräten (z. B. Telefonen) derzeit nicht möglich.

Aus der GB 2 298 339 A ist ein Verfahren zum Übertragen von Kurznachrichten zwischen einem Kurznachrichten-Dienstzentrum und einem DECT-Schnurlostelefon, bestehend aus einer Feststation und einem Mobilteil, bekannt, bei dem die Kurznachricht von dem Dienstzentrum zu der Feststation über eine separate, Dienstzentrumsbetreiber-spezifische Verbindung, die z.B. als ein X.25-Netzwerk realisiert ist, gemäß einem SMS-spezifischen Protokoll übertragen wird.

Aus der US 5,815,506 ist ein Satellitenkommunikationssystem bekannt, über das eine Kurznachricht, die von einem Festnetzteilnehmer generiert worden sind, gemäß einem SMS-spezifischen Protokoll an einen Mobilfunkteilnehmer übertragen werden. Die Kurznachricht wird dazu zunächst von dem Festnetzteilnehmer über ein PSTN-Netz an einen Kurznachrichtenserver übertragen. Von dort gelangt die Kurznachricht über eine lokale Satellitenbodenstation, einen Satelliten und einer Mobilfunkstation zum Mobilfunkteilnehmer. Für die Kurznachrichtenübertragung zwischen dem Festnetzteilnehmer und dem Mobilfunkteilnehmer wird eine Signalisierung außerhalb des Sprach- bzw. Nutzdatenbandes, die sogenannte Außenbandsignalisierung, benutzt. Bei dieser Art der Kurznachrichtenübertragung lassen sich Nachrichtenmengen bis zu maximal 16 Kbyte übertragen. In dem PSTN-Netz stehen für diese Art der Übertragung ein "DIAL UP"-Modem sowie eine DTMF-Tonerkennung zur Verfügung.

Der Erfindung liegt daher die Aufgabe zugrunde, ein Verfahren, Telekommunikations-Endgerät, Short-Message-Dienstzentrum und Telekommunikationssystem anzugeben, die die Übermittlung von Kurznachrichten nach dem Vorbild des SMS in einem leitungsgebundenen Telefonnetz (Festnetz) ermöglichen.

Diese Aufgabe wird hinsichtlich ihres Verfahrensaspektes durch ein Verfahren mit den Merkmalen des Anspruchs 1 und hinsichtlich ihres Anordnungsaspektes durch ein Telekommunikations-Endgerät mit den Merkmalen des Anspruchs 2, durch ein Short-Message-Dienstzentrum mit den Merkmalen des Anspruchs 3 und durch ein Telekommunikationssystem mit den Merkmalen des Anspruchs 4 gelöst.

Die Erfindung schließt den grundlegenden Gedanken ein, ohne Rücksicht auf die tiefgreifenden Systemunterschiede zwischen Mobilfunknetzen einerseits und den bekannten leitungsgebundenen Netzen (Festnetzen) andererseits die bewährte SMS-Protokollarchitektur des GSM-Standards (bzw. auch eine vergleichbare Architektur des UMTS-Standards) auf das Festnetz gewissermaßen abzubilden und auszuweiten.

Mit den nachfolgend beschriebenen Spezifikationen definiert die Erfindung das Übertragungsprotokoll und die physikalischen und administrativen Voraussetzungen zur Übertragung von Kurznachrichten im Short-Message(SMS)-Format zwischen dem Endgerät und dem Short-Message-Dienstzentrum. Das Übertragungsprotokoll wird hierbei bevorzugt in enger Anlehnung an das beim GSM-Standard definierte Protokoll festgelegt. Hiermit wird das Ziel verfolgt, die Übermittlung von Kurznachrichten als für das Festnetz neuen Dienst mit geringem Aufwand und hoher Kompatibilität mit bestehenden Systemen anzubieten. Es wird ein einheitliches SMS-Format im GSM-Netz und im Festnetz verwendet, wodurch die reibungslose Übermittlung von Short Messages zwischen einem nach dem GSM-Standard aufgebauten und betriebenen Mobilfunknetz und dem erfindungsgemäß ausgerüsteten Festnetz gewährleistet wird. Zudem bietet der mit dieser Ausführung der Erfindung eingeschlagene Weg den erheblichen praktischen Vorteil, dass in der Spezifikation des SMS-Dienstes weitestgehend auf die anerkannten und mittlerweile erprobten und bewährten GSM-Spezifikationen zurückgegriffen werden kann.

In der physikalischen Schicht erfolgt die Datenübertragung zwischen Endgerät und Dienstzentrum mittels DTMF-Signalisierung und/oder über eine nach ETS 300 659-1 und ETS 300 659-2 spezifizierte FSK(Frequency Shift Keying - Frequenzumtastkodierung) Off-Hook-Signalisierung im Sprachband (Innenbandsignalisierung). Diese genannten Übertragungsverfahren können in beliebigen Kombinationen eingesetzt werden. Insbesondere kann das Endgerät eine Signalisierung mittels DTMF vornehmen und das Dienstzentrum kann die FSK-Modulation nutzen, wobei natürlich die jeweils empfangende Einheit für das angewandte Verfahren angepasst sein muss.

Oberhalb der physikalischen Schicht ist eine Datenverbindungs-Schicht (Data-Link-Layer) spezifiziert, die den logischen Verbindungsaufbau und das Aufsetzen auf den Standard GSM-SMS gewährleistet. Der letztere Standard ist insbesondere in den ETSI-Dokumenten GSM04.07 (ETS 300 556), GSM04.11 und GSM03.40 definiert. In Kompatibilität hierzu kann der Data-Link-Layer in Anpassung an die konkreten Anforderungen frei definiert werden.

Gemäß einer vorteilhaften Ausprägung der Erfindung sind die neu definierte physikalische Schicht und Datenverbindungs-Schicht mit den bestehenden Schichten (Layern) des GSM-SMS-Protokollsatzes kombiniert. Hierbei handelt es sich um die Short-Message-Transferschicht (Short Message Transfer Layer = SM-TL) gemäß ETSI-Dokument GSM03.40, die Short-Message-Relayschicht (Short Message Relay Layer = SM-RL) nach GSM03.40 und 04.11 sowie die Verbindungsmanagement-Schicht (Connection Management Layer = CM) nach GSM04.11.

In der zuletzt genannten Schicht CM ist speziell eine zusätzliche Nachricht zur Signalisierung des Verbindungszustandes (CP-Connect) definiert, deren Format nach GSM04.07/Kapitel 11 bestimmt ist. Eine spezielle Festlegung gibt es auch hinsichtlich des Formates einer Nachricht in der Data Link Layer DL. Hierauf wird weiter unten genauer eingegangen.

In einer bevorzugten Anwendung der Erfindung ist, wie weiter oben bereits angedeutet, eines der Telekommunikations-Endgeräte an ein, z.B. nach dem GSM- oder auch dem künftigen UMTS-Standard betriebenes, Mobilfunknetz angeschlossen, wobei die Verbindung zwischen beiden Netzen in üblicher Weise durch eine Gateway-Mobilvermittlungsstelle hergestellt wird.

Eine weitere vorteilhafte Anwendung der Erfindung ergibt sich, wenn mindestens eines der Telekommunikations-Endgeräte ein Schnurlostelefon ist, von dem bzw. zu dem die Kurznachricht über eine, z.B. nach dem DECT-Standard betriebene, Feststation oder Nebenstellenanlage in das bzw. aus dem Festnetz übertragen wird. Moderne Schnurlostelefone verfügen über die wichtigsten hardwaremäßigen Voraussetzungen zur Implementierung des vorgeschlagenen Dienstes; insbesondere sind sie in der Regel mit einer geeigneten Anzeigeeinheit und Mitteln zur DTMF-Signalisierung ausgerüstet und zur Erkennung der oben erwähnten FSK-Off-Hook-Signalisierung im Sprachband ausgebildet.

Vorteile und Zweckmäßigkeiten der Erfindung ergeben sich im Übrigen aus der nachfolgenden genaueren Beschreibung anhand der Figuren. Von diesen zeigen:
Fig. 1 eine Prinzipskizze eines Telekommunikationssystems gemäß der Erfindung,
Fig. 2 eine Darstellung des Schichtenmodells (SI-Modells) der Konfiguration nach Fig. 1,
Fig. 3 ein Flussdiagramm für einen vom Telekommunikations-Endgerät initiierten Verbindungsaufbau gemäß einer Ausführung der Erfindung,
Fig. 4 ein Flussdiagramm für einen vom Short-Message-Dienstzentrum initiierten Verbindungsaufbau gemäß einer Ausführung der Erfindung,
Fig. 5 eine Darstellung des Aufbaus einer Nachricht zum Start der Prozedur auf der Verbindungsmanagement-Schicht und
Fig. 6 eine Darstellung des Nachrichtenformates auf der Datenverbindungs-Schicht.

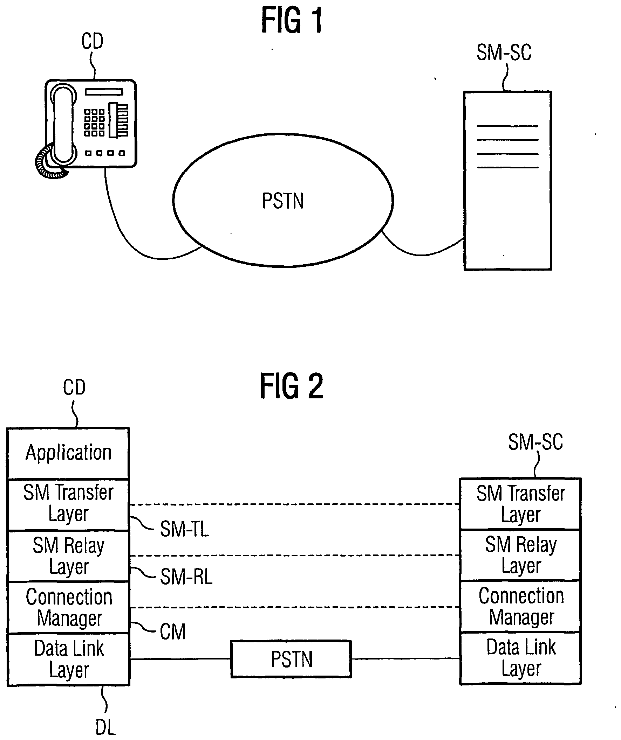

Fig. 1 zeigt schematisch die grundlegenden Komponenten eines erfindungsgemäßen Telekommunikationssystems, nämlich ein öffentliches leitungsgebundenes Fernsprechnetz (Festnetz) PSTN, ein an dieses angeschlossenes Telekommunikations-Endgerät CD und ein ebenfalls an das Festnetz angeschlossenes Short-Message-Dienstzentrum SM SC. Auf das Zusammenspiel dieser Komponenten beziehen sich die nachfolgenden Ausführungen zur Erläuterung der Erfindung.

Fig. 2 zeigt das zugehörige SI-Schichtenmodell, oberhalb der (hier nicht dargestellten) physikalischen Schicht. Die Schichtstruktur umfasst zunächst eine - weiter unten genauer spezifizierte - Datenverbindungs-Schicht DL (Data Link Layer) und weiterhin die an sich aus dem GSM-SMS-Standard bekannten Schichten Verbindungsmanager CM (Connection Manager), Short-Message-Relaisschicht SM-RL (SM Relay Layer) und Short-Message-Transferschicht SM-TL (SM Transfer Layer) sowie - auf Seiten des Endgerätes - Applikation (Application).

Die Protokollbeschreibungen der Schichten SM-TL, SM-RL und CM sind den ETSI-Dokumenten GSM03.40 [1] und GSM04.11 [3] zu entnehmen; siehe dazu das anliegende Normen-/Dokumentenverzeichnis.

Die Grundvoraussetzung zur Übertragung von Kurznachrichten (Short Messages) über das Festnetz PSTN ist eine Durchschaltvermittlung zwischen den beteiligten Einheiten (Telekommunikations-Endgeräte und Short-Message-Dienstzentrum). Es ist dann unerheblich, ob die Einheiten über ISDN oder eine analoge Schnittstelle angeschlossen sind.

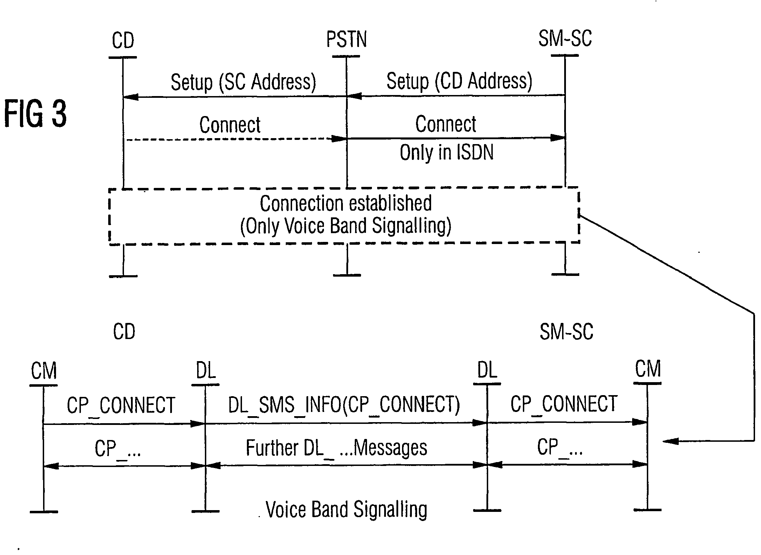

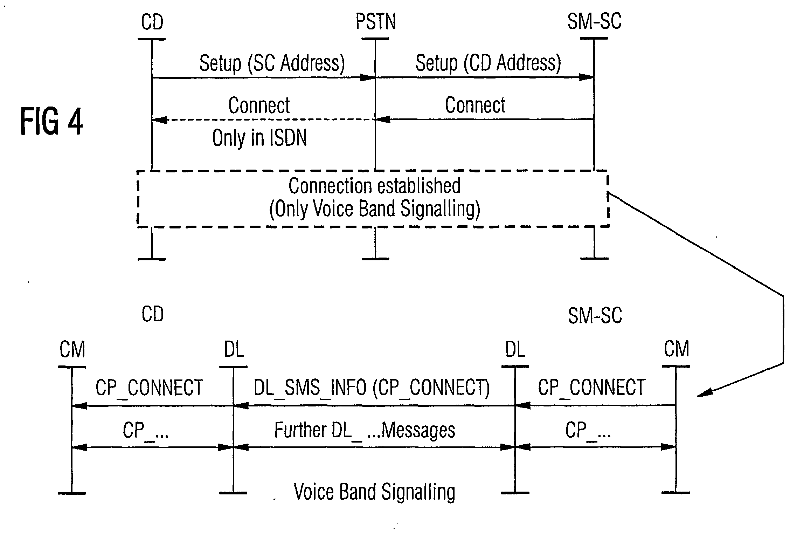

In den Figuren 3 und 4 ist schematisch der Aufbau einer Verbindung ausgehend von einem Telekommunikations-Endgerät (Fig. 3) bzw. ausgehend von dem Short-Message-Dienstzentrum (Fig. 4) dargestellt. Diese Diagramme sind für den Fachmann selbst erklärend und bedürfen daher hier keiner weiteren Erläuterung.

Im Falle eines ISDN-Netzes sind die Nachrichten (Messages) funktioneller Art und werden im ISDN-D-Kanal übertragen. Bei einem analogen Netz handelt es sich um Rufimpulse und Belegt-Signale. Nach Aufbau der Verbindung werden sämtliche Informationen zwischen den Einheiten per FSK-Signalisierung im Sprachband übertragen, speziell in Übereinstimmung mit den ETSI-Spezifikationen ETS 300 659-1 [4] und ETS 300 659-2 [5].

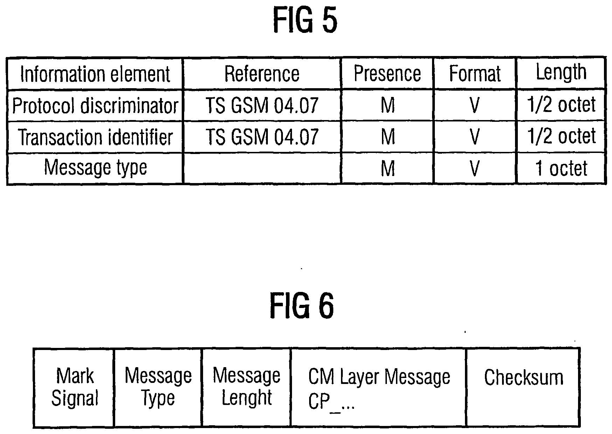

In Fig. 5 ist der Aufbau einer zusätzlichen Nachricht CP CONNECT gezeigt, die zur Benachrichtigung der rufenden Einheit seitens der angerufenen Einheit über den Aufbau der Verbindung dient. Diese Benachrichtigung ist erforderlich, um die Abläufe in der CM-Schicht in Gang zu setzen. Die Nachrichtenartkodierung ist: 0x40 0100 0000B, und das Format folgt GSM04.7/Kapitel 11 [2].

Die Schicht DL ermöglicht dem Verbindungsmanager (Schicht CM) die Absendung und den Empfang von Nachrichten mit der Partner-Einheit, sie stellt die Bitfehlererfassung bereit und realisiert für eine Nachricht in der Schicht CM ein Ankündigungssignal (Mark Signal).

In Fig. 6 ist das Format einer Nachricht in der Datenverbindungs-Schicht dargestellt. Das Feld "Mark Signal" besteht aus einem Block von 80 ± 25 Bit. Das Feld "Message Type" umfasst ein Oktett und enthält ein binär kodierte Identifizierungs-Kennzahl für die Nachricht. Die Kodierung für einen DL_SMS_INFO Message Type ist: 011H 0001 0001B. Die Kodierung für einen DL_SMS_ERROR Message Type ist: 012H 0001 0010 B.

Das Feld "Message Length" umfasst ein Oktett und enthält die binär kodierte Anzahl von Oktetts der Nachricht (unter Ausnahme der Oktetts des Message Type, der Message Length und der Checksum). Insgesamt ist eine Nachrichtenlänge bis zu 255 Oktetts erlaubt. Das Feld "Checksum" umfasst ein Oktett und enthält die beiden Komplemente der Summe aller Oktetts in der Nachricht, beginnend vom "Message Type"-Oktett bis zum Ende, modulo 256.

Im Falle eines Prüfsummen-Fehlers sendet die Datenverbindungs-Schicht der empfangenden Einheit eine Nachricht des Typs "DL_SMS_ERROR" an die (ursprünglich) sendende Einheit. In dieser Nachricht ist das Datenfeld leer und die Nachrichtenlänge (Message Length) auf Null gesetzt. Die Datenverbindungs-Schicht der sendenden Einheit hat daraufhin die letzte gesendete Nachricht zu wiederholen.

Zur physikalischen Schicht ist noch anzumerken, dass im Falle einer FSK-Signalisierung eine Halbduplex-1200-Baud-Modulation eingesetzt werden kann. Im Falle einer DTMF-Signalisierung wird jedes Oktett einer Nachricht in der Datenverbindungs-Schicht in das höhere (obere) und niedere (untere) Halbbyte aufgeteilt. Jedes Halbbyte wird mit einem DTMF-Bit kodiert. Zuerst wird das obere Halbbyte gesendet und dann das untere. Im Falle der DTMF-Signalisierung wird das Ankündigungssignal der DL-Nachricht weggelassen.

Hinsichtlich der Signalisierungsmethode bestehen diverse Kombinationsmöglichkeiten; im Normalfall wird im Telekommunikations-Endgerät eine Auswahl fest installiert, die dann vom Nutzer nicht mehr zu verändern ist.

## Patentansprüche

1. Verfahren zur Übermittlung einer Nachricht zwischen einem Telekommunikations-Endgerät (CD), das an ein leitungsgebundenes Telefonnetz (PSTN) angeschlossen ist, und einem Short-Message-Dienstzentrum (SMSC), wobei
- die Nachricht als Kurznachricht, insbesondere über eine Eingabetastatur oder einen Touch-Screen, an dem Telekommunikations-Endgerät (CD) eingegeben und in ein Short-Message-Format gebracht wird, oder
die Nachricht dem Short-Message-Dienstzentrum (SMSC) als in ein Short-Message-Format gebrachte Kurznachricht zur Weiterleitung an das Telekommunikations-Endgerät (CD) gesendet wird,
- über eine physikalische Schicht und eine Datenverbindungs-Schicht (DL) ein Verbindungsaufbau zwischen dem Telekommunikations-Endgerät (CD) und dem Short-Message-Dienstzentrum (SMSC) realisiert wird,
- die Kurznachricht im Short-Message-Format mit einer FSK-Off-Hook-Signalisierung im Sprachband entweder von dem Telekommunikations-Endgerät (CD) an das Short-Message-Dienstzentrum (SMSC) oder von dem Short-Message-Dienstzentrum (SMSC) an das Telekommunikations-Endgerät (CD) übertragen wird und
- die in dem Short-Message-Dienstzentrum (SMSC) empfangene Kurznachricht an ein weiteres Telekommunikations-Endgerät weitergeleitet wird oder die in dem Telekommunikations-Endgerät (CD) empfangene Kurznachricht in ein Ausgabeformat umgesetzt und, insbesondere auf einer Anzeigeeinheit, ausgegeben wird.

2. Telekommunikations-Endgerät (CD) zur Übermittlung einer Nachricht an ein Short-Message-Dienstzentrum (SMSC), bei dem das Telekommunikations-Endgerät (CD) an ein leitungsgebundenes Telefonnetz (PSTN) angeschlossen ist,
**gekennzeichnet durch**
Mittel zur Implementierung eines SMS-Übertragungsprotokolls und Eingabe/Ausgabe der Nachricht, die derart ausgebildet sind, dass
- die Nachricht als Kurznachricht, insbesondere über eine Eingabetastatur oder einen Touch-Screen, an dem Telekommunikations-Endgerät eingegeben wird,
- die Kurznachricht in ein Short-Message-Format gebracht wird,
- über eine physikalische Schicht und eine Datenverbindungs-Schicht (DL) ein Verbindungsaufbau zwischen dem Telekommunikations-Endgerät (CD) und dem Short-Message-Dienstzentrum (SMSC) realisiert wird,
- die Kurznachricht im Short-Message-Format mittels einer FSK-Off-Hook-Signalisierung im Sprachband von dem Telekommunikations-Endgerät (CD) an das Short-Message-Dienstzentrum (SMSC) übertragen wird, das die Kurznachricht an ein weiteres Telekommunikations-Endgerät weiterleitet.

3. Short-Message-Dienstzentrum (SMSC) zur Übermittlung einer Nachricht an ein Telekommunikations-Endgerät (CD), bei dem das Telekommunikations-Endgerät (CD) an ein leitungsgebundenes Telefonnetz (PSTN) angeschlossen ist,
**gekennzeichnet durch**
Mittel zur Implementierung eines SMS-Übertragungsprotokolls, die derart ausgebildet sind, dass
- eine zur Weiterleitung an das Telekommunikations-Endgerät (CD) in ein Short-Message-Format gebrachte Kurznachricht empfangen wird,
- ein Verbindungsaufbau zwischen dem Telekommunikations-Endgerät (CD) und dem Short-Message-Dienstzentrum (SMSC) realisiert wird,
- die Kurznachricht im Short-Message-Format mittels einer FSK-Off-Hook-Signalisierung im Sprachband von dem Short-Message-Dienstzentrum (SMSC) an das Telekommunikations-Endgerät (CD) übertragen wird, das die Kurznachricht in ein Ausgabeformat umsetzt und ausgibt.

4. Telekommunikationssystem zur Übermittlung einer Nachricht zwischen einem Telekommunikations-Endgerät (CD) und einem Short-Message-Dienstzentrum (SMSC), mit
- einem leitungsgebundenen Telefonnetz (PSTN),
- dem Short-Message-Dienstzentrum (SMSC),
- dem Telekommunikations-Endgerät (CD), das an das leitungsgebundene Telefonnetz (PSTN) angeschlossen ist,
**dadurch gekennzeichnet, dass**
das Telekommunikations-Endgerät (CD) und das Short-Message-Dienstzentrum (SMSC) derart ausgebildet sowie das Telekommunikations-Endgerät (CD) dem Short-Message-Dienstzentrum (SMSC) derart zugeordnet sind, dass
- die Nachricht als Kurznachricht, insbesondere über eine Eingabetastatur oder einen Touch-Screen, an dem Telekommunikations-Endgerät (CD) eingegeben und in ein Short-Message-Format gebracht wird, oder
die Nachricht dem Short-Message-Dienstzentrum (SMSC) als in ein Short-Message-Format gebrachte Kurznachricht zur Weiterleitung an das Telekommunikations-Endgerät (CD) gesendet wird,
- über eine physikalische Schicht und eine Datenverbindungs-Schicht (DL) ein Verbindungsaufbau zwischen dem Telekommunikations-Endgerät (CD) und dem Short-Message-Dienstzentrum (SMSC) realisiert wird,
- die Kurznachricht im Short-Message-Format mittels einer FSK-Off-Hook-Signalisierung im Sprachband entweder von dem Telekommunikations-Endgerät (CD) an das Short-Message-Dienstzentrum (SMSC) oder von dem Short-Message-Dienstzentrum (SMSC) an das Telekommunikations-Endgerät (CD) übertragen wird und
- die in dem Short-Message-Dienstzentrum (SMSC) empfangene Kurznachricht an ein weiteres Telekommunikations-Endgerät weitergeleitet wird oder die in dem Telekommunikations-Endgerät (CD) empfangene Kurznachricht in ein Ausgabeformat umgesetzt und, insbesondere auf einer Anzeigeeinheit, ausgegeben wird.

5. Telekommunikationssystem nach Anspruch 4,
**dadurch gekennzeichnet, dass**
das Telekommunikations-Endgerät (CD) ein Schnurlostelefon ist, welches über eine nach dem DECT-Standard betriebene Feststation oder Nebenstellenanlage an das leitungsgebundene Telefonnetz (PSTN) angeschlossen ist.

6. Telekommunikationssystem nach Anspruch 4,
**gekennzeichnet durch**
ein Übertragungsprotokoll, in dem neben einer Datenverbindungs-Schicht (DL) und einer physikalischen Schicht eine Short-Message-Transferschicht (SM-TL) gemäß ETSI-Dokument GSM03.40, eine Short-Message-Relaisschicht (SM-RL) nach GSM03.40 und 04.11 und sowie eine Verbindungsmanagement-Schicht (CM) nach GSM04.11 definiert sind.

7. Telekommunikationssystem nach Anspruch 6,
**dadurch gekennzeichnet, dass**
in der Verbindungsmanagement-Schicht (CM) eine zusätzliche Nachricht zur spezifischen Signalisierung des Verbindungszustandes an die rufende Einheit im Format nach GSM04.07/Kapitel 11 definiert ist.

8. Telekommunikationssystem nach Anspruch 6,
**dadurch gekennzeichnet, dass**
das Format einer Nachricht in der Datenverbindungs-Schicht (DL) aus
- einem Feld "Mark-Signal",
- einem Feld "Message-Type",
- einem Feld "Message-Length",
- einem Feld "CM Layer Message CP_...",
- einem Feld "Checksum",
besteht, wobei die Felder in dem Format in der genannten Reihenfolge angeordnet sind.

9. Telekommunikationssystem nach Anspruch 4,
**dadurch gekennzeichnet, dass**
das Short-Message-Dienstzentrum (SMSC) zur Übermittlung von Kurznachrichten im Short-Message-Format dem leitungsgebundenen Telefonnetz (PSTN) zugeordnet ist.

## Claims

1. Method for transmission of a message between a telecommunication terminal (CD), which is connected to a line-connected telephone network (PSTN), and a short message service centre (SMSC), wherein
- the message is input as a short message, in particular via an input keypad or a touchscreen, on the telecommunication terminal (CD) and is converted into a short message format, or the message is sent to the short message service centre (SMSC) as a short message converted into a short message format for the purpose of forwarding to the telecommunication terminal (CD),
- a connection setup is realized between the telecommunication terminal (CD) and the short message service centre (SMSC) via a physical layer and a data link layer (DL),
- the short message is transmitted in the short message format with FSK off-hook signalling in the voice band either from the telecommunication terminal (CD) to the short message service centre (SMSC) or from the short message service centre (SMSC) to the telecommunication terminal (CD), and
- the short message received in the short message service centre (SMSC) is forwarded to a further telecommunication terminal or the short message received in the telecommunication terminal (CD) is converted into an output format and is output, in particular on a display unit.

2. Telecommunication terminal (CD) for transmission of a message to a short message service centre (SMSC), wherein the telecommunication terminal (CD) is connected to a line-connected telephone network (PSTN),
**characterized by**
means for implementing an SMS transmission protocol and inputting/outputting the message, said means being configured in such a way that
- the message is input as a short message, in particular via an input keypad or a touchscreen, on the telecommunication terminal,
- the short message is converted into a short message format,
- a connection setup is realized between the telecommunication terminal (CD) and the short message service centre (SMSC) via a physical layer and a data link layer (DL),
- the short message is transmitted in the short message format by means of FSK off-hook signalling in the voice band from the telecommunication terminal (CD) to the short message service centre (SMSC), which forwards the short message to a further telecommunication terminal.

3. Short message service centre (SMSC) for transmission of a message to a telecommunication terminal (CD), wherein the telecommunication terminal (CD) is connected to a line-connected telephone network (PSTN),
**characterized by**
means for implementing an SMS transmission protocol, said means being configured in such a way that
- a short message converted into a short message format for forwarding to the telecommunication terminal (CD) is received,
- a connection setup is realized between the telecommunication terminal (CD) and the short message service centre (SMSC),
- the short message is transmitted in the short message format by means of FSK off-hook signalling in the voice band from the short message service centre (SMSC) to the telecommunication terminal (CD), which converts the short message into an output format and outputs it.

4. Telecommunication system for transmission of a message between a telecommunication terminal (CD) and a short message service centre (SMSC), having
- a line-connected telephone network (PSTN),
- the short message service centre (SMSC),
- the telecommunication terminal (CD), which is connected to the line-connected telephone network (PSTN),
**characterized in that**
the telecommunication terminal (CD) and the short message service centre (SMSC) are designed, and the telecommunication terminal (CD) is assigned to the short message service centre (SMSC), such that
- the message is input as a short message, in particular via an input keypad or a touchscreen, on the telecommunication terminal (CD) and is converted into a short message format, or the message is sent to the short message service centre (SMSC) as a short message converted into a short message format for the purpose of forwarding to the telecommunication terminal (CD),
- a connection setup is realized between the telecommunication terminal (CD) and the short message service centre (SMSC) via a physical layer and a data link layer (DL),
- the short message is transmitted in the short message format by means of FSK off-hook signalling in the voice band either from the telecommunication terminal (CD) to the short message service centre (SMSC) or from the short message service centre (SMSC) to the telecommunication terminal (CD), and
- the short message received in the short message service centre (SMSC) is forwarded to a further telecommunication terminal or the short message received in the telecommunication terminal (CD) is converted into an output format and is output, in particular on a display unit.

5. Telecommunication system according to Claim 4,
**characterized in that**
the telecommunication terminal (CD) is a cordless telephone which is connected to the line-connected telephone network (PSTN) via a private branch exchange or fixed station operated according to the DECT standard.

6. Telecommunication system according to Claim 4,
**characterized by**
a transmission protocol in which a short message transfer layer (SM-TL) in accordance with ETSI document GSM03.40, a short message relay layer (SM-RL) according to GSM03.40 and 04.11 and also a connection management layer (CM) according to GSM04.11 are defined in addition to a data link layer (DL) and a physical layer.

7. Telecommunication system according to Claim 6,
**characterized in that** an additional message for the specific signalling of the connection state to the calling unit in the format according to GSM04.07/chapter 11 is defined in the connection management layer (CM).

8. Telecommunication system according to Claim 6,
**characterized in that**
the format of a message in the data link layer (DL) comprises
- a field "mark signal",
- a field "message type",
- a field "message length",
- a field "CM layer message CP_...",
- a field "checksum",
the fields in the format being arranged in the order mentioned.

9. Telecommunication system according to Claim 4,
**characterized in that**
the short message service centre (SMSC) serving for the transmission of short messages in the short message format is assigned to the line-connected telephone network (PSTN).

## Revendications

1. Procédé de transmission d'un message entre un terminal de télécommunication (CD) qui est raccordé à un réseau téléphonique filaire (PSTN) et un centre de services de message court (SMSC),
- le message étant introduit en tant que message court, en particulier via un clavier d'entrée ou un écran tactile, au niveau du terminal de télécommunication (CD) et étant converti dans un format de message court ou bien le message étant envoyé au centre de services de message court (SMSC) en tant que message court converti dans un format de message court pour retransmission au terminal de télécommunication (CD),
- un établissement de liaison entre le terminal de télécommunication (CD) et le centre de services de message court (SMSC) étant réalisé via une couche physique et une couche de liaison de données (DL),
- le message court étant transmis au format de message court au moyen d'une signalisation FSK Off Hook dans la bande vocale soit du terminal de télécommunication (CD) au centre de services de message court (SMSC) soit du centre de services de message court (SMSC) au terminal de télécommunication (CD) et
- le message court reçu dans le centre de services de message court (SMSC) étant retransmis à un autre terminal de télécommunication ou le message court reçu dans le terminal de télécommunication (CD) étant converti dans un format de sortie et produit en sortie, en particulier au niveau d'une unité d'affichage.

2. Système de télécommunication (CD) pour transmettre un message à un centre de services de message court (SMSC), dans lequel le terminal de télécommunication (CD) est raccordé à un réseau téléphonique filaire (PSTN),
**caractérisé par**
des moyens pour implémenter un protocole de transmission de SMS et/ou l'entrée / la sortie du message ainsi, lesquels sont réalisés de telle sorte que :
- le message est introduit en tant que message court, en particulier via un clavier d'entrée ou un écran tactile, au niveau du terminal de télécommunication ;
- le message court est converti dans un format de message court ;
- un établissement de liaison entre le terminal de télécommunication (CD) et le centre de services de message court (SMSC) est réalisé via une couche physique et une couche de liaison de données (DL) ;
- le message court est transmis au format de message court au moyen d'une signalisation FSK Off Hook dans la bande vocale du terminal de télécommunication (CD) au centre de services de message court (SMSC) qui retransmet le message court à un autre terminal de télécommunication.

3. Centre de services de message court (SMSC) pour transmettre un message à un terminal de télécommunication (CD), dans lequel le terminal de télécommunication (CD) est raccordé à un réseau téléphonique filaire (PSTN), **caractérisé par** des moyens pour implémenter un protocole de transmission de SMS, lesquels sont réalisés de telle sorte que :
- un message court converti dans un format de message court pour retransmission au terminal de télécommunication (CD) est reçu ;
- un établissement de liaison entre le terminal de télécommunication (CD) et le centre de services de message court (SMSC) est réalisé ;
- le message court est transmis au format de message court au moyen d'une signalisation FSK Off Hook dans la bande vocale du centre de services de message court (SMSC) au terminal de télécommunication (CD) qui convertit le message court dans un format de sortie et le produit en sortie.

4. Système de télécommunication pour transmettre un message entre un terminal de télécommunication (CD) et un centre de services de message court (SMSC), comportant :
- un réseau téléphonique filaire (PSTN),
- un centre de services de message court (SMSC),
- le terminal de télécommunication (CD) qui est raccordé au réseau téléphonique filaire (PSTN),
**caractérisé en ce que**
le terminal de télécommunication (CD) et le centre de services de message court (SMSC) sont réalisés de telle sorte et le terminal de télécommunication (CD) est associé au centre de services de message court (SMSC) de telle sorte que
- le message est introduit en tant que message court, en particulier via un clavier d'entrée ou un écran tactile, au niveau du terminal de télécommunication (CD) et est converti dans un format de message court ou bien le message est envoyé au centre de services de message court (SMSC) en tant que message court converti dans un format de message court pour retransmission au terminal de télécommunication (CD),
- un établissement de liaison entre le terminal de télécommunication (CD) et le centre de services de message court (SMSC) est réalisé via une couche physique et une couche de liaison de données (DL),
- le message court est transmis au format de message court via une signalisation FSK Off Hook dans la bande vocale soit du terminal de télécommunication (CD) au centre de services de message court (SMSC) soit du centre de services de message court (SMSC) au terminal de télécommunication (CD) et
- le message court reçu dans le centre de services de message court (SMSC) est retransmis à un autre terminal de télécommunication ou le message court reçu dans le terminal de télécommunication (CD) est converti dans un format de sortie et produit en sortie, en particulier au niveau d'une unité d'affichage.

5. Système de télécommunication selon la revendication 4, **caractérisé en ce que** le terminal de télécommunication (CD) est un téléphone sans fil qui est connecté au réseau téléphonique filaire (PSTN) via une station fixe ou un autocommutateur téléphonique privé fonctionnant selon la norme DECT.

6. Système de télécommunication selon la revendication 4, **caractérisé par** un protocole de transmission dans lequel sont définies, outre une couche de liaison de données (DL) et une couche physique, une couche de transfert de message court (SM-TL) selon le document GSM03.40 de l'ETSI, une couche de relais de message court (SM-RL) selon GSM03.40 et 04.11 et une couche de gestion de liaison (CM) selon GSM04.11.

7. Système de télécommunication selon la revendication 6, **caractérisé en ce qu'**est défini, dans la couche de gestion de liaison (CM), un message supplémentaire pour la signalisation spécifique de l'état de liaison à l'unité appelante au format selon GSM04.07/chapitre 11.

8. Système de télécommunication selon la revendication 6, **caractérisé en ce que** le format d'un message, dans la couche de liaison de données (DL), se compose
- d'un champ « Mark-Signal »
- d'un champ « Message-Type »,
- d'un champ « Message-Length »,
- d'un champ « CM Layer Message CP ... »,
- d'un champ « Checksum »,
les champs étant agencés dans le format dans l'ordre indiqué.

9. Système de télécommunication selon la revendication 4, **caractérisé en ce que** le centre de services de message court (SMSC) est, pour la transmission de messages courts au format de message court, associé au réseau téléphonique filaire (PSTN).
